# EUROPÄISCHE PATENTSCHRIFT

(11) **EP 3 042 253 B1**
(45) Veröffentlichungstag und Bekanntmachung des Hinweises auf die Patenterteilung: **30.05.2018**
(21) Anmeldenummer: 14761327.7
(22) Anmeldetag: 03.09.2014
(51) Int. Cl.: G05B 19/042, A01G 25/16, G05B 19/409, G05B 19/4093

(54) **BEREGNUNGSSTEUERUNGSSYSTEM**
SPRINKLER CONTROL SYSTEM
SYSTÈME DE COMMANDE D'ARROSAGE

(30) Priorität: 06.09.2013 DE 102013109784
(43) Veröffentlichungstag der Anmeldung: 13.07.2016
(73) Patentinhaber: HUSQVARNA AB, 561 82 Huskvarna (SE)
(72) Erfinder: KÖHLER, Moritz, 8001 Zürich (CH); BOLLIGER, Philipp, 8400 Winterthur (CH)
(74) Vertreter: Finkele, Rolf
(86) Internationale Anmeldenummer: PCT/EP2014/068764
(87) Internationale Veröffentlichungsnummer: WO 2015/032834

(56) Entgegenhaltungen:
- WO-A2-2006/060465
- DE-A1-102005 058 798
- US-A1- 2012 018 532

## Beschreibung

### Stand der Technik

Die Erfindung betrifft ein Beregnungssteuerungssystem zur Steuerung zumindest eines Regners.

Aus der DE10 2005 058 798 A1 ist eine Beregnungsvorrichtung mit einem Regner mit einem Beregnungssteuerungssystem bekannt. Das Beregnungssteuerungssystem weist eine Steuereinrichtung mit einem programmierbaren Speicher auf, in welchem ein Benutzer zum Festlegen einer Beregnungsfläche zu einer Mehrzahl von Winkelstellungen einer Düsenanordnung einen einer jeweils zugeordneten Reichweite entsprechenden Steuerwert einprogrammiert. Weitere Steuerwerte werden durch die Steuereinrichtung interpoliert. Die Steuerwerte werden vom Benutzer durch "Probieren" ermittelt. Das Verfahren ist zeitaufwändig, zudem besteht ein großes Risiko, bei der Ermittlung der Steuerwerte ungewollt Gebiete außerhalb der Beregnungsfläche zu beregnen.

Aus der US 2012/018532 ist eine Beregnungsvorrichtung mit einem Regner mit einem Beregnungssteuerungssystem bekannt. Das Beregnungssteuerungssystem umfasst ein Programmiersystem, das dazu vorgesehen ist, zumindest eine Beregnungsfläche des Regners mit Hilfe einer Gebietskarte händisch festzulegen.

Aus der DE 10 2005 058798 A1 ist ebenfalls eine Beregnungsvorrichtung mit einem Regner mit einem Beregnungssteuerungssystem bekannt. Das Beregnungssteuerungssystem umfasst ein Programmiersystem, das dazu vorgesehen ist, zumindest eine Beregnungsfläche des Regners mit Hilfe einer Gebietskarte händisch festzulegen.

Die Aufgabe der Erfindung besteht insbesondere darin, ein Beregnungssteuerungssystem zur Steuerung zumindest eines Regners mit verbesserten Eigenschaften hinsichtlich der Festlegung der Beregnungsfläche des Regners zur Verfügung zu stellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Beregnungssteuerungssystem zur Steuerung zumindest eines Regners.

Es wird ein Programmiersystem vorgeschlagen, das dazu vorgesehen ist, zumindest eine Beregnungsfläche des Regners mit Hilfe einer Gebietskarte festzulegen, wobei das Programmiersystem dazu vorgesehen ist, Geometriedaten der Gebietskarte in Beregnungssteuerparameter der Steuervorrichtung des Regners zu transformieren.

Unter einem "Regner" soll in diesem Zusammenhang insbesondere eine Vorrichtung zur Beregnung einer Fläche, wie einer landwirtschaftlichen Nutzfläche, insbesondere aber eines Parks und/oder einer Gartenfläche, mit einer Flüssigkeit, insbesondere Wasser, verstanden werden. Die Fläche kann dem Anbau und der Kultivierung von Pflanzen und/oder der Freizeitgestaltung und/oder Erholung von Benutzern der Fläche dienen. Die Fläche kann Teil eines öffentlichen Gartens oder Parks sein. Bevorzugt ist die Fläche Teil eines privaten Gartens. Die Fläche kann ein Gebäude, wie ein öffentliches Gebäude, ein Hotel und/oder ein Krankenhaus, oder bevorzugt ein Wohngebäude, ganz oder teilweise umgeben. Die Fläche kann auch Teil eines Gebäudes sein, wie insbesondere eines Dachgartens, oder einer Terrasse. Die Fläche kann auch Teil eines Golfplatzes oder einer ähnlichen Nutzfläche sein. Unter "Benutzern" sollen in diesem Zusammengang insbesondere Personen verstanden werden, die sich im Gebiet der durch den Regner zu beregnenden Fläche aufhalten. Weiter können auch Tiere, insbesondere Haustiere, die sich im Garten aufhalten, Benutzer der Fläche sein. Bevorzugt weist der Regner Düsen auf, durch die Flüssigkeitsstrahlen auf die Fläche gelenkt werden können. Es sind verschiedene Typen von Regnern bekannt, insbesondere Viereckregner mit um eine horizontale Achse oszillierend schwenkbarer Düsenanordnung und Kreis- oder Sektorregner mit um eine vertikale Achse drehbarer Düsenanordnung. Es sind weitere Formen von Regnern denkbar, insbesondere Regner mit einer Düsenanordnung, die sich auf einer konvexen, insbesondere halbkugelförmigen, Oberfläche erstreckt. Unter einer "Beregnungsfläche" soll in diesem Zusammenhang eine Fläche verstanden werden, die vom Regner beregnet werden soll. Bevorzugt verfügt der Regner über Mittel, mit denen sich die Form der Beregnungsfläche einstellen und/oder beeinflussen lässt. Insbesondere kann eine Stellbewegung, in der die Düsenanordnung bewegbar ist, einstellbar und/oder beeinflussbar sein. Weiter kann ein Flüssigkeitsdruck, mit dem die Düsen beaufschlagt werden, für alle und/oder für einzelne Düsen einstellbar und/oder beeinflussbar sein. Bevorzugt kann der Regner so ausgebildet sein, dass er bei einer Steuerung mit geeigneten Beregnungssteuerparametern eine frei definierbare Beregnungsfläche beregnen kann, die ausgehend von einer Position des Regners innerhalb einer maximalen Strahlreichweite des Regners, die eine maximale Bewegungsfläche des Regners definiert, liegt. Unter einer "Gebietskarte" soll in diesem Zusammenhang insbesondere eine Karte verstanden werden, die einen Garten mit Aktivitätsgebieten aufweist. Die Gebietskarte kann die Grenzen sowie eine Topographie eines Gebiets umfassen. Die Aktivitätsgebiete können insbesondere Beregnungsgebiete umfassen. Unter einem "Beregnungsgebiet" soll in diesem Zusammenhang insbesondere ein Gebiet des Gartens verstanden werden, das durch Beregnen bewässert werden soll. Wird ein Beregnungsgebiet durch einen Regner beregnet, kann es mit der Beregnungsfläche des Regners identisch sein. Es ist aber auch möglich, dass ein Beregnungsgebiet durch mehrere Regner beregnet wird und zumindest Teile mehrerer Beregnungsflächen enthält. Es ist ebenfalls möglich, dass ein Regner mehrere Beregnungsgebiete beregnet und seine Beregnungsfläche mehrere Beregnungsgebiete ganz oder teilweise enthält. Insbesondere weist die Gebietskarte Konturen zumindest eines Beregnungsgebiets auf. Unter einem "Programmiersystem" soll in diesem Zusammenhang insbesondere ein System verstanden werden, welches dazu vorgesehen ist, Informationen der Gebietskarte und weitere Informationen so aufzubereiten, dass sie dazu geeignet sind, die Beregnungsfläche des Regners festzulegen. Das Programmiersystem kann insbesondere mechanische und bevorzugt elektrische- und/oder elektronische Steuer-, Datenverarbeitungs- und Speichereinheiten aufweisen. Das Programmiersystem kann zumindest teilweise in den Regner integriert sein. Die Beregnungsfläche des Regners und das Beregnungsgebiet können vorteilhaft mit Hilfe der Gebietskarte festgelegt werden. Ein aufwändiges Programmieren des Beregnungssteuerungssystems durch den Benutzer kann entfallen. Ein versehentliches Beregnen von Gebieten außerhalb von Beregnungsgebieten kann vermieden werden.

Es wird vorgeschlagen, dass das Programmiersystem zumindest eine Programmiereinheit aufweist, die dazu vorgesehen ist, Beregnungssteuerparameter an eine Steuervorrichtung des Regners zu übermitteln. Unter einer "Steuervorrichtung des Regners" soll in diesem Zusammenhang insbesondere eine Vorrichtung des Regners verstanden werden, die dazu vorgesehen ist, die Strahlreichweite und/oder eine Strahlrichtung der aus den Düsen des Regners austretenden Strahlen zu beeinflussen. Die Steuervorrichtung kann insbesondere Antriebe und/oder Stellventile sowie Mittel, diese entsprechend übermittelter Beregnungssteuerparameter einzustellen, aufweisen. Die Programmiereinheit kann insbesondere dazu vorgesehen sein, während eines Beregnungsvorgangs durch den Regner an die Steuereinheit eine Abfolge von Beregnungssteuerparametern zu übermitteln, um eine Beregnung der gewünschten Beregnungsfläche zu erreichen. Die Programmiereinheit weist vorteilhaft einen Parameterspeicher auf. Die Programmiereinheit kann vorteilhaft dazu vorgesehen sein, in einem Betriebsmodus eine Beregnung der Beregnungsfläche mit Hilfe der in dem Parameterspeicher gespeicherten Informationen selbstständig zu steuern. Der Regner kann mit der Programmiereinheit unabhängig eingesetzt werden. Es kann ebenfalls möglich sein, dass die Steuereinheit eine Speichereinheit zur Speicherung der Abfolge der Beregnungssteuerparameter für einen Beregnungsvorgang aufweist. In diesem Fall kann die Programmiereinheit die Abfolge der Beregnungssteuerparameter vorteilhaft an die Steuereinheit übermitteln und die Steuereinheit kann einen Beregnungsvorgang selbstständig steuern. Die Programmiereinheit kann mittels einer Datenverbindung zur Übermittlung von Beregnungssteuerparametern mit der Steuereinheit des Regners verbunden sein. Besonders vorteilhaft kann die Programmiereinheit Teil des Regners sein und insbesondere in einem gemeinsamen Gehäuse mit dem Regner angeordnet sein. Die Programmiereinheit kann dazu vorgesehen sein, die für den Regner geeigneten Beregnungssteuerparameter mit Hilfe von an die Programmiereinheit übermittelten Geometriedaten zu bestimmen. Die Geometriedaten können insbesondere mit Hilfe der Gebietskarte ermittelt sein und absolute Koordinaten von Beregnungsgebieten und/oder die Beregnungsfläche beschreiben. Unter "absoluten Koordinaten" sollen in diesem Zusammenhang insbesondere in einem Koordinatensystem, das von Regnermodellen und/oder Regnerpositionen unabhängig ist, dargestellte Koordinaten verstanden werden insbesondere Koordinaten in einem kartesischen Koordinatensystem. Unter einer "Regnerposition" sollen in diesem Zusammenhang insbesondere ein Ort und eine Orientierung eines Regners bezüglich der Gebietskarte verstanden werden. Insbesondere können die Geometriedaten unabhängig von der Art der für den Regner geeigneten Beregnungssteuerparameter und/oder von einem Regnermodell sein. Bevorzugt weist bei einer Mehrzahl von Regnern jeder Regner eine an das Regnermodell angepasste Programmiereinheit auf und/oder lässt sich die Programmiereinheit auf das zu steuernde Regnermodell einstellen. Gegenüber der Programmiereinheit übergeordnete Komponenten des Beregnungssteuerungssystems können die Geometriedaten unabhängig von der Ausführung des Regners bestimmen. In einer weiteren, vorteilhaften Ausgestaltung der Erfindung können der Programmiereinheit übergeordnete Komponenten des Beregnungssteuerungssystems Regnermodelle aufweisen, insbesondere von Kreisregnern und/oder Viereckregnern, um aus den Geometriedaten der Beregnungsgebiete und/oder Beregnungsflächen relative Koordinaten zu ermitteln und an die Programmiereinheit zu übermitteln. Unter "relativen Koordinaten" sollen in diesem Zusammenhang insbesondere in einem Koordinatensystem, das spezifisch für ein Regnermodell ist und/oder bei dem eine Regnerposition innerhalb der Gebietskarte berücksichtigt ist, dargestellte Koordinaten verstanden werden. Insbesondere können die Koordinaten Stellgrößen des Regners zur Beregnung der Beregnungsfläche aufweisen wie Winkelstellungen und/oder Einstellungen von Stellventilen. Die Programmiereinheit kann besonders einfach aufgebaut sein. Transformationen von übergeordneten, absoluten Koordinaten zu regnerspezifischen relativen Koordinaten können auf einem gegenüber der Programmiereinheit übergeordneten System stattfinden.

Weiter wird vorgeschlagen, dass das Programmiersystem über ein Programmiergerät zur Definition von Beregnungsgebieten und/oder Beregnungsflächen verfügt. Unter einem "Programmiergerät" soll in diesem Zusammenhang insbesondere ein Gerät verstanden werden, das dazu vorgesehen ist, Beregnungsgebiete und/oder Beregnungsflächen in einer Interaktion mit dem Benutzer zu definieren. Bevorzugt ist das Programmiergerät als ein durch den Benutzer tragbares Gerät ausgebildet. Bevorzugt weist das Programmiergerät eine insbesondere drahtlose Datenverbindung mit der Programmiereinheit auf. Besonders bevorzugt kann die Programmiereinheit und/oder das Programmiersystem eine drahtlose, internetbasierte Datenverbindung aufweisen. Das Programmiergerät kann bevorzugt als Smartphone und/oder besonders bevorzugt als Tablet-Computer mit einer die für das Programmiersystem benötigten Funktionen bereitstellenden Programmiersoftware ausgebildet sein. Bevorzugt weist das Programmiergerät eine grafische Anzeige, insbesondere einen Bildschirm, auf. Bevorzugt zeigt das Programmiergerät dem Benutzer zumindest die Gebietskarte, Beregnungsflächen und Beregnungsgebiete und Regnerpositionen grafisch an. Bevorzugt verfügt das Programmiergerät über Eingabemittel, insbesondere einen Touchscreen, für Benutzereingaben. Besonders bevorzugt kann der Benutzer auf der Gebietskarte Beregnungsgebiete und/oder Regnerpositionen mit Hilfe des Touchscreens grafisch markieren. Bevorzugt kann das Programmiergerät maximal mögliche Beregnungsflächen abhängig von Regnerpositionen und Regnermodell auf der Gebietskarte anzeigen. Das Programmiergerät kann die Gebietskarte bevorzugt über eine Internetverbindung von einem externen System, insbesondere einem Kartenserver, empfangen. Bevorzugt kann das Programmiergerät über weitere Hilfsmittel zur Ermittlung der Gebietskarte und/oder der Beregnungsgebiete und/oder der Regnerpositionen verfügen, wie insbesondere eine Kamera und/oder einen Kompass und/oder Bewegungs- und/oder Beschleunigungssensoren und/oder ein Ortungssystem, wie zum Beispiel ein auf Laserentfernungsmessern basiertes Ortungssystem, und/oder einen GPS-Empfänger oder ein anderes funkgestütztes Ortungssystem. Bevorzugt kann das Ortungsgerät eine Software aufweisen, die dazu vorgesehen ist, Gebietskarten und/oder Beregnungsgebiete und/oder Regnerpositionen mit Hilfe von Kameraaufnahmen zu bestimmen und/oder Gebietskarten mit Hilfe von Kameraaufnahmen um Merkmale zu ergänzen. Zusätzlich und/oder alternativ können 3D-Kameras, Laservermessungsgeräte oder weitere, dem Fachmann als geeignet erscheinende Geräte zur Gebietskartengenerierung und/oder Ergänzung genutzt werden. Bevorzugt kann das Programmiergerät dazu vorgesehen sein, Standorte der Kameraaufnahmen mit dem Ortungssystem des Programmiergeräts zu bestimmen. Bevorzugt kann das Programmiergerät dazu vorgesehen sein, Beregnungsgebiete und Regnerpositionen durch Kameraaufnahmen und/oder Videoaufnahmen und/oder Verfolgen eines Pfads zu ermitteln. Insbesondere kann der Benutzer das Programmiergerät mit aktivierter Kamerafunktion und/oder Ortungsfunktion entlang einer Begrenzung eines zu definierenden Beregnungsgebiets bewegen. Das Programmiergerät kann den Pfad der Bewegung verfolgen, mit der Gebietskarte verknüpfen und auf diese Weise das Beregnungsgebiet innerhalb der Gebietskarte bestimmen. Es ist auch möglich, dass die Gebietskarte anhand des Pfads der Bewegung erstellt wird. Eine Definition der Beregnungsgebiete und/oder Beregnungsflächen kann besonders einfach sein. Eine Vermessung der Beregnungsgebiete mit weiteren Hilfsmitteln kann entfallen. Eine Definition der Beregnungsgebiete kann unabhängig von Eigenschaften und Typ des Regners sein. Definierte Beregnungsgebiete können zur Steuerung unterschiedlicher Regner genutzt werden. Ein Beregnen von Gebieten außerhalb von Beregnungsgebieten während der Definition von Beregnungsgebieten kann vermieden werden. Bevorzugt weisen die Regner zumindest ein Positionierungsmittel auf, das dazu vorgesehen ist, das Programmiergerät in definierter Lage und/oder Orientierung am Regner auszurichten. Das Positionierungsmittel kann insbesondere von einer oder mehreren Ausnehmungen und/oder Anschlägen gebildet werden, die zu einer bevorzugt formschlüssigen Positionsübertragung geeignet sind. Das Programmiergerät kann vorteilhaft die Regnerposition anhand seiner eigenen, durch Ortungsfunktionen des Programmiergeräts bekannten Position ermitteln. Erfindungsgemäß ist das Programmiersystem dazu vorgesehen, Geometriedaten der Gebietskarte in Beregnungssteuerparameter der Steuervorrichtung des Regners zu transformieren. Die Beregnungssteuerparameter können insbesondere in relativen Koordinaten des jeweiligen Regners dargestellt sein. Unter "Geometriedaten" sollen in diesem Zusammenhang insbesondere Begrenzungen von Beregnungsgebieten und/oder Beregnungsflächen verstanden werden. Insbesondere können die Geometriedaten in absoluten, von Regnermodellen und/oder Regnerpositionen unabhängigen Koordinaten vorliegen. Das Programmiersystem kann die Geometriedaten in abhängig vom Regnermodell und Regnerposition relative Koordinaten der jeweiligen Regner transformieren und an diese übermitteln. Das Programmiersystem kann besonders flexibel mit unterschiedlichen Regnermodellen und Regnerpositionen eingesetzt werden. Das Programmiersystem kann einen Lernmodus aufweisen, der dazu vorgesehen ist, Parameter des Regners zu bestimmen und/oder zu lernen. Insbesondere kann eine Strahlreichweite abhängig von einer Einstellung eines Stellventils des Regners sein. Im Lernmodus kann die Strahlreichweite bei verschiedenen Einstellungen des Stellventils gemessen und mit dem Programmiersystem, insbesondere von der Programmiereinheit, abgespeichert werden. Das Programmiersystem kann die Beregnungssteuerparameter vorteilhaft automatisch mit Hilfe von Geometriedaten ermitteln. Ein Lernen der Beregnungssteuerparameter zur Beregnung eines Beregnungsgebiets und/ oder einer Beregnungsfläche kann entfallen. Insbesondere kann das Programmiersystem bei einer Änderung der Regnerposition oder bei einem Austausch eines Regners gegen einen Regner in einer abweichenden Ausführung angepasste Beregnungssteuerparameter ermitteln. Das Beregnungssteuerungssystem kann besonders flexibel sein. Besonders vorteilhaft weist das Programmiersystem einen mit der Programmiereinheit und/oder dem Programmiergerät in zumindest einem Betriebszustand verbundenen Gebietsserver auf. Unter einem "Gebietsserver" soll in diesem Zusammenhang insbesondere ein Server verstanden werden, der dazu vorgesehen ist, Gebiete innerhalb einer Gebietskarte zu verwalten und/oder Aktivitäten innerhalb der Gebiete zu koordinieren und/oder Informationen über die Gebiete abzuspeichern. Die Gebiete können Beregnungsgebiete sein aber auch Gebiete weiterer Art, wie Mähgebiete, die von einem Rasenmäher gemäht werden sollen, oder auch Düngegebiete, Bewässerungsgebiete, Beleuchtungsgebiete und weitere, dem Fachmann als sinnvoll erscheinende Gebiete. Die Gebiete können sich überlappen, so dass ein Bereich der Gebietskarte mehreren Gebieten und/oder Gebietstypen zugeordnet sein kann. Zum Beispiel kann ein Beregnungsgebiet ganz oder teilweise auch ein Mähgebiet sein. Der Gebietsserver kann vorteilhaft ein internetbasierter Server sein. Der Gebietsserver kann besonders einfach Daten mit der Programmiereinheit, dem Programmiergerät, dem Benutzer und/oder weiteren, internetbasierten Diensten austauschen, wie insbesondere Kartenservern, Kalenderdiensten und/oder Wetterdiensten. Der Gebietsserver kann vorteilhaft Informationen zur Steuerung des Regners bereitstellen; insbesondere kann ein Wetterbericht und/oder es können Kalenderinformationen genutzt werden, um einen optimalen Beregnungszeitpunkt und/oder eine optimale Beregnungsmenge zu bestimmen. Bevorzugt kann der Gebietsserver zur Bestimmung von Beregnungszeitpunkten und/oder Beregnungsmengen Informationen eines externen Expertensystems nutzen und/oder kann der Gebietsserver selbst ein Expertensystem aufweisen. Unter einem "Expertensystem" soll in diesem Zusammenhang insbesondere ein System verstanden werden, welches Informationen mit gespeicherten Daten, Modellen und Algorithmen verknüpft und auswertet. Insbesondere kann das Expertensystem eine Datenbank mit Standorten und Arten von Pflanzen aufweisen sowie Pflanzenmodelle, die eine voraussichtliche Entwicklung verschiedener Pflanzen abhängig von Umweltparametern wie Temperatur, Feuchtigkeit, Beleuchtung, Nährstoffgehalt und Wind, beschreiben, sowie Pflegealgorithmen, die bevorzugte Pflegeverfahren für verschiedene Pflanzen beschreiben. Das Expertensystem kann bevorzugte Beregnungszeitpunkte und Beregnungsmengen anhand dieser Informationen besonders vorteilhaft festlegen. Der Gebietsserver kann Aktivitäten weiterer Gartengeräte und/oder des Benutzers koordinieren und/oder Konflikte zwischen der Beregnung und Aktivitäten weiterer Gartengeräte und/oder dem Benutzer vermeiden. Der Gebietsserver kann Teil des Programmiersystems sein und/oder Funktionen aufweisen, die Teil des Programmiersystems sind. Insbesondere können Gebietskarten und/oder Beregnungsgebiete auf dem Gebietsserver gespeichert sein. Das Programmiersystem kann über besonders vorteilhafte Informationen zur Festlegung von Beregnungsflächen und/oder Beregnungszeitpunkten und/oder Beregnungsmengen verfügen. Der Gebietsserver kann Informationen weiterer Gartengeräte zur Festlegung von Beregnungsgebieten und/oder Beregnungsflächen nutzen. Insbesondere kann ein Mähroboter über die Funktion verfügen, ein Mähgebiet automatisch zu erfassen. Der Mähroboter kann die Geometriedaten des erfassten Mähgebiets an den Gebietsserver übertragen und der Gebietsserver kann aufgrund der Geometriedaten des Mähgebiets ein Beregnungsgebiet und/oder eine oder mehrere Beregnungsflächen festlegen. Das Programmiersystem kann dem Gebietsserver Informationen bereitstellen. Informationen des Programmiersystems können vom Gebietsserver mit Informationen weiterer Gartengeräte verknüpft und/oder dem Benutzer besonders einfach bereitgestellt werden, insbesondere internetbasiert. Vorteilhaft kann der Gebietsserver über eine Regnerdatenbank verfügen, in der technische Daten verschiedener Regner und/oder Regnerpositionen abgespeichert sind. Der Gebietsserver kann vorteilhaft Geometriedaten von absoluten, von einem Regnermodell und/oder einer Regnerposition unabhängigen Koordinaten in relative, an Regnermodell und Regnerposition angepasste Koordinaten transferieren. Der Gebietsserver kann unter Berücksichtigung der möglichen Beregnungsflächen der Regner bevorzugte Regnerpositionen zur Beregnung der Beregnungsgebiete bestimmen.

Besonders vorteilhaft ist das Programmiersystem dazu vorgesehen, zumindest ein Schutzgebiet aus Beregnungsgebieten und/oder der Beregnungsfläche auszunehmen. Unter einem "Schutzgebiet" soll in diesem Zusammenhang ein Gebiet verstanden werden, welches von der Beregnung ausgenommen werden soll. Bevorzugt haben bei überlappenden Gebieten Schutzgebiete Vorrang vor Beregnungsgebieten. Ein Schutzgebiet kann dauerhaft, temporär und/oder dynamisch definiert sein. Ein dauerhaftes Schutzgebiet kann eine Fläche innerhalb eines Beregnungsgebiets sein, die von der Beregnung ausgenommen werden soll, zum Beispiel ein durch das Beregnungsgebiet führender Weg. Ein temporäres Schutzgebiet kann ein in einem Zeitraum eingerichtetes Schutzgebiet sein, zum Beispiel ein Gebiet im Beregnungsgebiet, in dem sich ein oder mehrere Personen und/oder Benutzer in dem Zeitraum aufhalten. Ein dynamisches Schutzgebiet kann ein Gebiet sein, welches seinen Ort verändert. Insbesondere kann eine Zone um einen Benutzer, der sich im Beregnungsgebiet bewegt, von der Beregnung ausgenommen werden. Bevorzugt verfügt der Benutzer über ein Gerät, welches seine aktuelle Position an das Programmiersystem, insbesondere an den Gebietsserver, übermittelt, wie ein Smartphone, eine Smartwatch oder ein Smart-Glass, das über eine Ortungsfunktion verfügt. Der Benutzer kann ebenfalls einen Chip und/oder Tag mitführen, der Informationen an das Programmiersystem übermittelt. Insbesondere kann der Chip und/oder Tag dazu dienen, den Aufenthaltsort des Benutzers zu ermitteln und/oder zu übermitteln. Das Schutzgebiet kann durch einen Kreis um die aktuelle Position des Benutzers definiert sein. Das Schutzgebiet wird von der Beregnung ausgenommen. Eine unerwünschte Beregnung des Benutzers und/oder von weiteren Personen kann vermieden werden.

Weiter wird vorgeschlagen, dass das Programmiersystem in zumindest einem Betriebsmodus zu einer direkten Steuerung des Regners durch einen Benutzer vorgesehen ist. Unter einer "direkten Steuerung" soll in diesem Zusammenhang insbesondere verstanden werden, dass der Benutzer die Beregnungssteuerparameter des Regners wie zum Beispiel Einstellungen von Stellventilen und Ausrichtungen von Düsen direkt bestimmen kann. Bevorzugt kann das Programmiergerät über zumindest einen Betriebsmodus verfügen, der zu einer direkten Steuerung des Regners durch den Benutzer vorgesehen ist. Der Benutzer kann vorteilhaft Gebiete mit Hilfe des Regners beregnen.

Bevorzugt kann das Programmiersystem in zumindest einem Betriebsmodus dazu vorgesehen sein, Beregnungsflächen des Regners durch direkte Steuerung des Regners durch den Benutzer festzulegen. Der Benutzer kann mit dem Regner die zu beregnende Beregnungsfläche durch direkte Steuerung des Regners beregnen, indem er die Beregnungssteuerparameter manuell so einstellt, dass eine Beregnung der Beregnungsfläche erfolgt. Bevorzugt sind Eingabemittel vorgesehen, mit denen der Benutzer Beregnungssteuerparameter abspeichern kann. Bevorzugt kann das Programmiergerät diese Eingabemittel aufweisen, insbesondere auf seinem Touchscreen anzeigen. Der Benutzer kann durch Verändern der Beregnungssteuerparameter die Flüssigkeitsstrahlen so lange in der Beregnungsfläche bewegen, bis die Beregnungsfläche vollständig beregnet ist. Das Programmiersystem kann die zur Beregnung der Beregnungsfläche notwendige Abfolge von Beregnungssteuerparametern selbstständig oder bei Eingabe des Benutzers abspeichern. In der Folge können so festgelegte Beregnungsflächen zur automatischen, vom Programmiersystem gesteuerten Beregnung genutzt werden. Insbesondere kann das Programmiersystem die gelernten Beregnungssteuerparameter von relativen in absolute Koordinaten transferieren und die Beregnungsfläche mit Hilfe des Gebietskartenservers abspeichern. Die durch direkte Steuerung des Regners festgelegten Beregnungsflächen können vorteilhaft zur Beregnung durch Regner genutzt werden, die eine abweichende Regnerposition und/oder einen abweichenden Regnertyp aufweisen.

Weiter wird vorgeschlagen, dass das Programmiersystem dazu vorgesehen ist, Beregnungssteuerparameter für einen Kreisregner zu ermitteln, der eine durch die Steuervorrichtung des Regners um eine vertikale Achse drehbare Düsenanordnung und eine einstellbare Strahlreichweite aufweist, und/oder Beregnungssteuerparameter für einen Viereckregner zu ermitteln, der eine um eine horizontale Achse schwenkbare Düsenanordnung aufweist. Bevorzugt kann die Steuervorrichtung zumindest ein Stellventil und zumindest einen Antrieb aufweisen. Ein Kreisregner kann besonders geeignet sein, ein durch die Gebietskarte definiertes Beregnungsgebiet zu beregnen. Insbesondere kann eine Kontur der Beregnungsfläche des Regners an das Beregnungsgebiet angepasst werden, indem Beregnungssteuerparameter des Kreisregners geeignet verändert werden. Ein Viereckregner kann besonders kostengünstig sein. Ein Viereckregner kann eine zumindest im Wesentlichen rechteckförmige Beregnungsfläche besonders effizient und/oder wirtschaftlich beregnen.

Es wird insbesondere vorgeschlagen, dass die Beregnungssteuerparameter für den Kreisregner zumindest einen Strahlreichweitenvektor und/oder Winkelvektor und/oder Verweildauervektor umfassen und/oder dass die Beregnungssteuerparameter für den Viereckregner zumindest einen Schwenkwinkelvektor und/oder Verweildauervektor umfassen. Unter einem "Strahlreichweitenvektor" soll in diesem Zusammenhang insbesondere ein Vektor verstanden werden, in dem eine Abfolge von Strahlreichweiten und/oder von mit Strahlreichweiten korrespondierenden Einstellungen des Stellventils des Regners enthalten ist. Unter einem "Winkelvektor " soll in diesem Zusammenhang insbesondere ein Vektor verstanden werden, in dem eine Abfolge von Winkelstellungen der Düsenanordnung des Regners enthalten ist, insbesondere Winkelstellungen um die vertikale Achse. Unter einem "Verweildauervektor" soll in diesem Zusammenhang insbesondere ein Vektor verstanden werden, der eine Abfolge von Verweildauern enthält, auf die der Regner mit den jeweiligen Stellgrößen der Strecken- und/oder Winkelvektoren eingestellt bleiben soll, bis ein Übergang zu den nächsten Stellgrößen stattfindet, und/oder der eine Abfolge von Geschwindigkeiten enthält, mit denen die Beregnungssteuerparameter des Regners verändert werden sollen. Die Beregnungssteuerparameter können besonders gut für eine Ansteuerung eines Kreisregners geeignet sein. Unter einem "Schwenkwinkelvektor" soll in diesem Zusammenhang insbesondere ein Vektor verstanden werden, in dem eine Abfolge von Winkelstellungen der schwenkbaren Düsenanordnung des Viereckregners um die horizontale Achse enthalten ist. Eine Breite der Beregnungsfläche senkrecht zur horizontalen Achse kann vorteilhaft eingestellt werden. Bevorzugt können die Beregnungssteuerparameter für den Viereckregner zusätzlich einen gegenüber der horizontalen Achse gemessenen Öffnungswinkelbereich der aus der Düsenanordnung austretenden Flüssigkeitsstrahlen umfassen. Eine Länge der Beregnungsfläche in Richtung der horizontalen Achse kann vorteilhaft eingestellt werden. Bevorzugt kann die Steuereinheit und/oder die Programmiereinheit dazu vorgesehen sein, Zwischenwerte der Vektoren zu interpolieren. Eine Genauigkeit der Beregnung kann verbessert werden. Alternativ zur Verwendung von Vektoren können die Beregnungssteuerparameter auch als Funktion der Zeit dargestellt werden. Dies ist insbesondere vorteilhaft, wenn sich der Verlauf der Beregnungssteuerparameter als Funktion der Zeit beschreiben lässt.

Weiter wird eine Beregnungsvorrichtung mit zumindest einem Regner und einem Beregnungssteuerungssystem vorgeschlagen. Insbesondere kann der Regner die Programmiereinheit und geeignete Schnittstellen zur Kommunikation mit weiteren Komponenten des Programmiersystems des Beregnungssteuerungssystems aufweisen. Die Beregnungsvorrichtung kann besonders flexibel zur Beregnung von Beregnungsgebieten eingesetzt werden.

Weiter wird ein Verfahren zur Festlegung einer Beregnungsfläche und/oder eines Beregnungsgebiets, mit einem Beregnungssteuerungssystem vorgeschlagen. Die Festlegung von Beregnungsflächen und/oder Beregnungsgebieten kann besonders komfortabel sein. Daten von Beregnungsflächen können zum Beregnen von Beregnungsgebieten mit unterschiedlichen Regnermodellen genutzt werden.

Das erfindungsgemäße Beregnungssteuerungssystem soll hierbei nicht auf die oben beschriebene Anwendung und Ausführungsform beschränkt sein. Insbesondere kann das erfindungsgemäße Beregnungssteuerungssystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Beregnungssteuerungssystems zur Steuerung eines Regners, mit einer Beregnungsfläche und mit einer Programmiereinheit und einem Programmiergerät,
- Fig. 2: eine schematische Darstellung des Programmiergeräts, mit einer Gebietskarte mit Beregnungsgebieten,
- Fig. 3: eine schematische Darstellung eines Beregnungsgebiets und eines Schutzgebiets,
- Fig. 4: eine schematische Darstellung von Betriebsmodi des Beregnungssteuerungssystems,
- Fig. 5: eine schematische Darstellung eines Ablaufs einer Programmierung einer Beregnungsfläche des Regners mit dem Beregnungssteuerungssystem,
- Fig. 6: eine schematische Darstellung einer Ermittlung von Beregnungssteuerparametern,
- Fig. 7: eine schematische Darstellung von Beregnungssteuerparametern bei einem als Kreisregner ausgebildeten Regner,
- Fig. 8: eine schematische Darstellung eines Datenflusses des Programmiersystems,
- Fig. 9: eine schematische Darstellung einer Festlegung der Beregnungsfläche in einem Beregnungsgebiet beim Kreisregner,
- Fig. 10: eine schematische Darstellung eines Viereckregners und von Beregnungssteuerparametern des Viereckregners und
- Fig. 11: eine schematische Darstellung der Festlegung der Beregnungsfläche in einem Beregnungsgebiet beim Viereckregner.

### Beschreibung des Ausführungsbeispiels

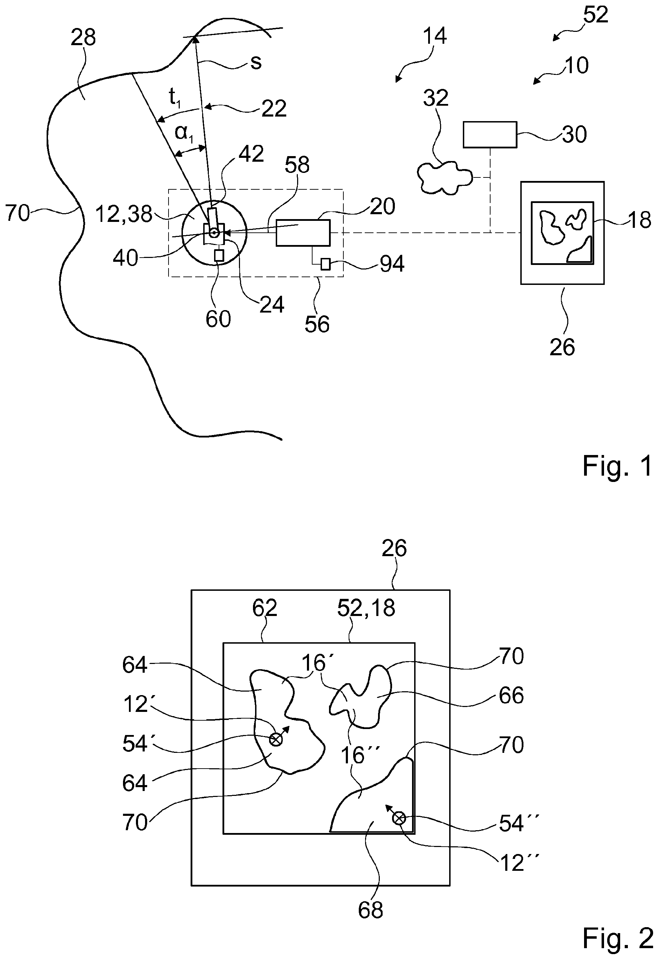

Figur 1 zeigt eine schematische Darstellung eines Ausschnitts eines Gartens 52 mit einem Beregnungssteuerungssystem 10 zur Steuerung von an Regnerpositionen im Garten angeordneten Regnern 12, mit einem Programmiersystem 14, das dazu vorgesehen ist, eine Beregnungsfläche 16 der Regner 12 mit Hilfe einer Gebietskarte 18 festzulegen.

Das Programmiersystem 14 weist eine Programmiereinheit 20 auf, die dazu vorgesehen ist, Beregnungssteuerparameter 22 an eine Steuervorrichtung 24 des Regners 12 zu übermitteln. Die Programmiereinheit 20 ist mit dem Regner 12 in einer gemeinsamen Gehäuseeinheit 56 angeordnet und verfügt über eine Datenverbindung 58 zur Übermittlung der Beregnungssteuerparameter 22 an die Steuervorrichtung 24 des Regners 12. Die Steuervorrichtung 24 enthält eine Speichereinheit 60 zur Speicherung der Beregnungssteuerparameter 22 eines Beregnungsvorgangs. Weiter weist die Programmiereinheit 20 einen Parameterspeicher 94 zur Speicherung von Beregnungssteuerparametern 22 und/oder Geometriedaten auf.

Weiter verfügt das Programmiersystem 14 über ein als Tabletcomputer mit einer Programmiersoftware ausgebildetes Programmiergerät 26 zur Definition von in Beregnungsgebieten 28 und Beregnungsflächen 16 der Regner 12 enthaltenen Geometriedaten. Das Programmiergerät 26 ist über eine drahtlose Internetverbindung mit der Programmiereinheit 20 verbunden. Figur 2 zeigt eine Darstellung eines Bildschirms 62 des Programmiergeräts 26. Der zu einer Benutzereingabe als berührungsempfindlicher Touch-Screen ausgebildete Bildschirm 62 zeigt die Gebietskarte 18 des Gartens 52. In der Gebietskarte 18 sind Konturen 70 von drei Gebieten 64, 66, 68 eingezeichnet. Die Gebiete 64, 66, 68 sind Beregnungsgebiete 28. Jedem der Gebiete 64, 66, 68 ist eine gewünschte Bewässerungsmenge zugeordnet, die vom Programmiersystem 14 mit den Konturen 70 der Gebiete 64, 66, 68 abgespeichert wird. Ein erster Regner 12' ist im Gebiet 64 an der Regnerposition 54', ein zweiter Regner 12" im Gebiet 68 an der Regnerposition 54" angeordnet. Die Regnerpositionen 54 enthalten jeweils Ort und Orientierung der Regner 12. Das Gebiet 66 wird durch die Regner 12' und 12" von den Gebieten 64 und 68 aus beregnet. Die Konturen 70 der Gebiete 64, 66, 68 und die Regnerpositionen 54 können vom Benutzer auf dem Bildschirm 62 eingezeichnet werden. Dazu lädt das Programmiergerät 26 eine Karte des Gebiets, das den Garten 52 enthält, von einem Server im Internet, so dass die Karte zur Gebietskarte 18 des Gartens 52 ergänzt werden kann. Das Programmiergerät 26 verfügt zusätzlich über hier nicht weitere dargestellte Ortungsmittel sowie über eine Kamera. In einem alternativen Betriebsmodus kann der Benutzer mit dem Programmiergerät 26 die Konturen 70 der Gebiete 64, 66, 68 ablaufen. Das Programmiergerät 26 erfasst die abgelaufenen Konturen 70 mit Hilfe der Ortungsmittel. Zusätzlich können Gebietsgrenzen mit Hilfe von Kamerabildern durch das Programmiergerät 26 erfasst werden. Die Bestimmung der Beregnungsgebiete 28 kann so durch das Programmiergerät 26 unterstützt werden. Beregnungsflächen 16' und 16" der Regner 12' und 12" werden vom Programmiergerät 26 so festgelegt, dass sie die Beregnungsgebiete 28 abdecken. Das Gebiet 66 ist zu einer besonders intensiven Beregnung vorgesehen und wird von den Beregnungsflächen 16' und 16" beider Regner 12' und 12" abgedeckt.

Das Programmiersystem 14 weist weiter einen mit der Programmiereinheit 20 und dem Programmiergerät 26 verbundenen Gebietsserver 30 auf. Der Gebietsserver 30 dient zur Speicherung von Gebietskarten 18, Beregnungsflächen 16, Beregnungsgebieten 28, Regnerpositionen 54 und weiterer Daten des Beregnungssteuerungssystems 10. Der Gebietsserver 30 ist zusätzlich Teil weiterer, hier nicht dargestellter Gartensteuerungssysteme und koordiniert deren Einsatz. Zusätzlich ruft der Gebietsserver 30 Daten von externen Informationssystemen 32 ab, insbesondere einen Wetterbericht. Diese Daten können vom Beregnungssteuerungssystem 10 zu einer Planung von Beregnungen genutzt werden. Weiter koordiniert der Gebietsserver 30 die Programmiereinheiten 20 der Regner 12 sowie die Zuordnung der Beregnungsflächen 16 der Regner 12 zu den Beregnungsgebieten 28, insbesondere wenn das Programmiergerät 26 nicht zur Verfügung steht. Das Programmiergerät 26 muss so nur zum Einsatz kommen, wenn die Gebietskartendaten mit dem Programmiergerät 26 modifiziert werden sollen.

Das Programmiersystem 14 ist dazu vorgesehen, die Geometriedaten der Gebietskarte 18 mit den Konturen 70 der Beregnungsgebiete 28 in die Beregnungssteuerparameter 22 der Steuervorrichtungen 24 der Regner 12' und 12" zu transformieren. Die Regner 12 sind als Kreisregner 38 ausgebildet. Die Kreisregner 38 weisen eine durch die Steuervorrichtungen 24 der Regner 12 um eine vertikale Achse 40 um einen Winkel α drehbare Düsenanordnung 42 mit einer einstellbaren Strahlreichweite s auf. Die Programmiereinheit 20 berechnet aus den Konturen 70 der Beregnungsgebiete 28, die zu einer Beregnung durch den jeweiligen Regner 12 vorgesehen sind, die für den Regner 12 geeigneten Beregnungssteuerparameter 22, so dass Strahlen des Regners 12 die von der Kontur 70 des Beregnungsgebiets 28 eingeschlossene Fläche beregnen.

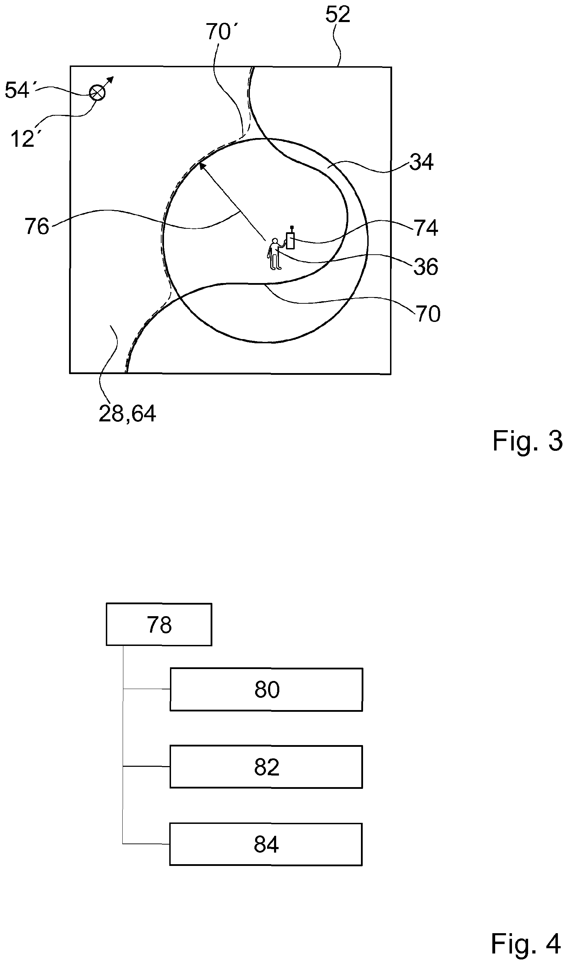

Figur 3 zeigt einen Ausschnitt der Gebietskarte 18. Ein Benutzer 36 durchquert das als Beregnungsgebiet 28 ausgebildete Gebiet 64. Der Benutzer 36 trägt ein Smartphone 74, das über eine Ortungsfunktion verfügt und über eine drahtlose Internetverbindung mit dem Programmiersystem 14 verbunden ist. Alternativ kann der Benutzer 74 die Meldung mit einer Smartwatch oder einem Smart-Glass oder einem ähnlichen geeigneten Gerät empfangen. Um den Benutzer 36 ist ein Schutzgebiet 34 mit einem Schutzradius 76 vorgesehen. Das Smartphone 74 überträgt eine aktuelle Position des Benutzers 36 an den Gebietsserver 30 des Programmiersystems 14. Der Gebietsserver 30 nimmt das Schutzgebiet 34 aus den Beregnungsgebieten 28 aus und übermittelt die so geänderten Beregnungsgebiete 28 und Beregnungsflächen 16 an die Programmiereinheiten 20 der Regner 12. Die Kontur 70 des Gebiets 64 wird zur neuen Kontur 70' modifiziert, so dass das Schutzgebiet 34 um den Benutzer 36 von der Beregnung ausgenommen wird. Bewegt sich der Benutzer 36 im Garten 52, wird die Position des Schutzgebiets 34 dynamisch mit Hilfe der jeweiligen vom Smartphone 74 übertragenen Position des Benutzers 36 aktualisiert. Ebenso kann ein Haustier, das über ein GPS-Halsband oder eine ähnliche Einrichtung verfügt, ebenfalls ein Benutzer 74 sein. Das Programmiersystem 14 kann den Aufenthaltsort des Haustiers erkennen und Beregnungsgebiete 28 und Beregnungsflächen 16 können auf die beschriebene Art modifizieren werden, so dass das Haustier nicht beregnet wird.

Figur 4 zeigt mögliche Betriebsmodi 78 des Beregnungssteuerungssystems 10. In einem unabhängigen Betrieb 80 führen die Regner 12 selbstständig Beregnungen der Beregnungsgebiete 28 aus. Die durch die Programmiereinheiten 20 ermittelten Beregnungssteuerparameter 22 sind auf den Speichereinheiten 60 der Steuervorrichtungen 24 der Regner 12 abgespeichert und werden nach einem festgelegten Zeitplan ausgeführt.

Ein benutzergesteuerter Betrieb 82 ist zu einer direkten Steuerung der Regner 12 durch den Benutzer 36 vorgesehen. Der Benutzer 36 übermittelt Beregnungssteuerparameter 22 mit Hilfe des Programmiergeräts 26 direkt an die Programmiereinheiten 20 und kann die Regner 12 so nach Bedarf selbst steuern. Die vom Benutzer 36 an die Programmiereinheit 20 übermittelten Beregnungssteuerparameter 22 werden zusätzlich von der Programmiereinheit 20 abgespeichert und an den Gebietsserver 30 übertragen und abgespeichert. Das Programmiersystem 14 ist in diesem Betriebsmodus dazu vorgesehen, Beregnungsflächen 16 des Regners 12 mittels direkter Steuerung des Regners 12 durch den Benutzer 36 festzulegen. Der Gebietsserver 30 ermittelt aus den Beregnungssteuerungsparametern 22 die vom Regner 12 beregnete Beregnungsfläche 16. Die Programmiereinheit 20 kann die abgespeicherten Beregnungssteuerparameter 22 nutzen, um zukünftig die Beregnungsfläche 16 im unabhängigen Betrieb selbstständig zu beregnen. Der Gebietsserver 30 kann die aus den Beregnungssteuerparametern 22 ermittelte Beregnungsfläche 16 nutzen, um zukünftig die Beregnung dieser Beregnungsfläche 16 automatisch zu steuern. Insbesondere kann der Gebietsserver 30 ausgehend von der ermittelten Beregnungsfläche 16 Beregnungssteuerparameter 22 für weitere Typen von Regnern 12 erzeugen.

Ein Systembetrieb 84 ist für einen durch den Gebietsserver 30 abgestimmten Betrieb eines Systems mehrerer Regner 12 und, falls vorhanden, weiterer Gartengeräte vorgesehen. Der Gebietsserver 30 verwaltet die Beregnungsgebiete 28 und bestimmt optimale Beregnungszeitpunkte und Beregnungsmengen. Der Gebietsserver 30 weist den Beregnungsgebieten 28 Regner 12 zu, bestimmt die Beregnungsflächen 16 der Regner 12 und übermittelt diese an die Programmiereinheiten 20 der Regner 12. Die Programmiereinheiten 20 berechnen aus den Daten des Gebietsservers 30 die Beregnungssteuerparameter 22 der Regner 12 und übermitteln diese an die Steuervorrichtungen 24 der Regner 12.

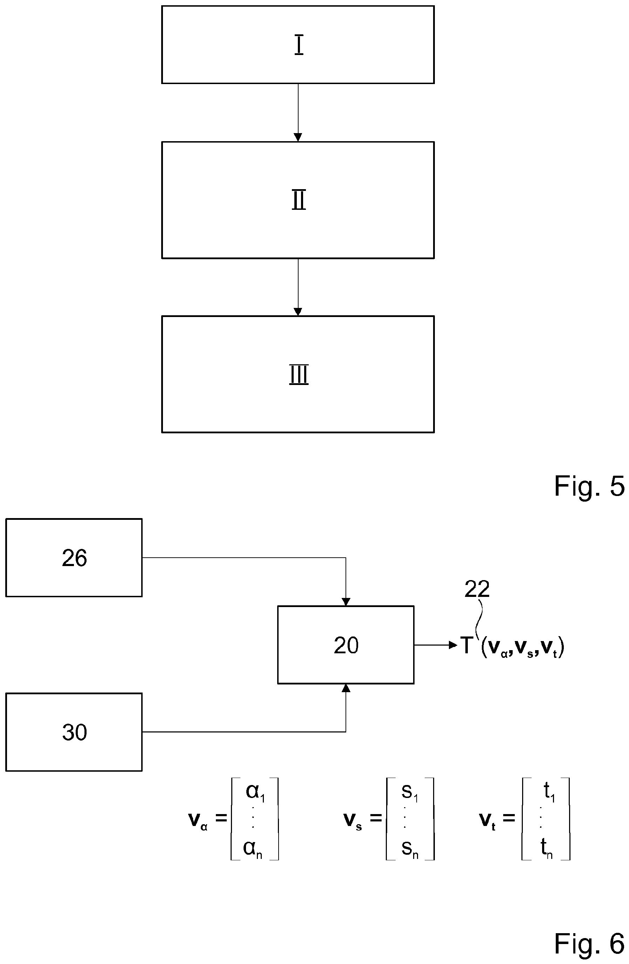

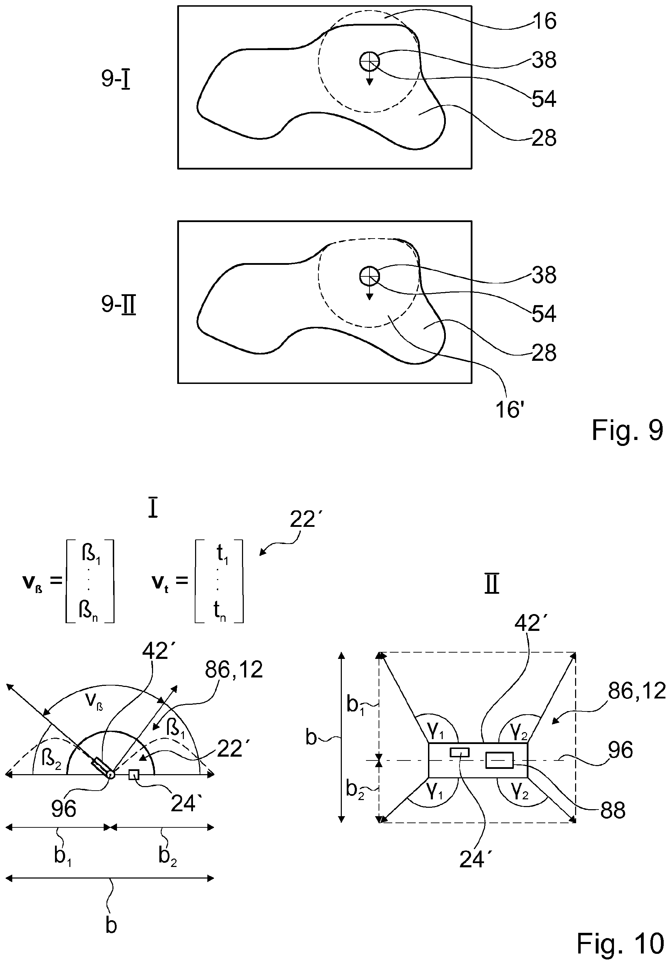

Figur 5 zeigt einen Ablauf einer Programmierung von Beregnungsgebieten 28. In einem Schritt I werden die Beregnungsgebiete 28 mit dem Programmiergerät 26 definiert. In einem Schritt II werden die Regnerpositionen 54 mit Ort und Orientierung erfasst. Die Regner 12 können Mittel zur Erfassung ihres Orts und ihrer Orientierung aufweisen, wie GPS-Empfänger, einen Kompass und/oder Laserentfernungsmesser, so dass die Ermittlung der Regnerpositionen 54 automatisch erfolgen kann. Die Erfassung der Regnerpositionen 54 kann auch durch das Programmiergerät 26 erfolgen. Vorteilhaft weisen die Regner 12, wie bei einem als Viereckregner 86 ausgebildeten Regner 12 in Figur 10 gezeigt, eine Ausnehmung 88 auf, in die das Programmiergerät 26 zur Ermittlung der Regnerposition 54 in bezüglich des Regners 12 definierter Position und Orientierung eingelegt werden kann. In einem Schritt III werden Geometriedaten und weitere Daten zur Beregnung der Beregnungsflächen 16 berechnet und anschließend an die Programmiereinheiten 20 übertragen. Der Schritt III kann vom Programmiergerät 26 oder vom Gebietsserver 30 ausgeführt werden. Werden die Geometriedaten durch den Gebietsserver 30 berechnet, überträgt das Programmiergerät 26 die Daten der Beregnungsgebiete 28 und die Regnerpositionen 54 an den Gebietsserver 30, der aus diesen die Geometriedaten und weitere Daten zur Beregnung der Beregnungsflächen 16 berechnet und an die Programmiereinheiten 20 überträgt.

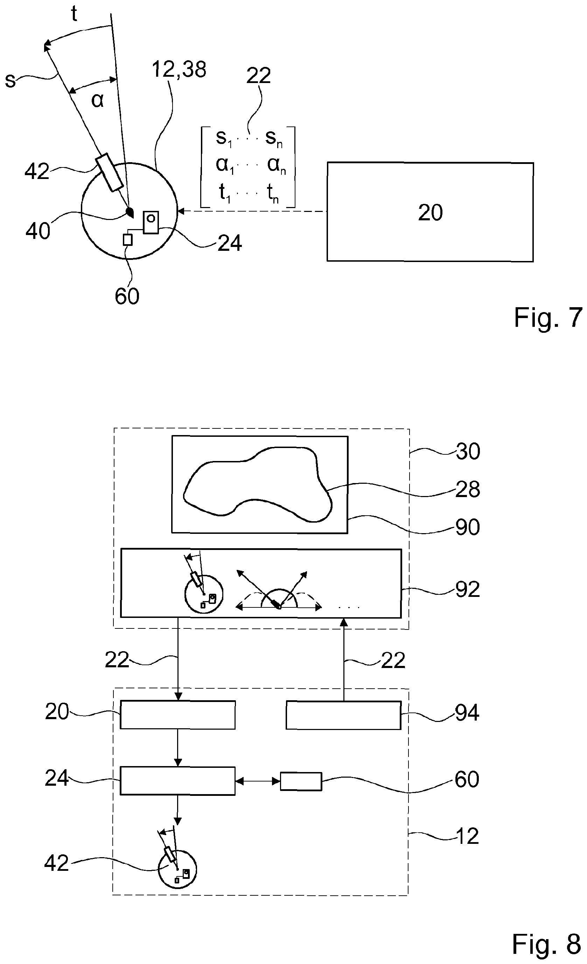

Figur 6 zeigt ein Blockschaltbild der Erzeugung der Beregnungssteuerparameter 22 des Beregnungssteuerungssystems 10 am Beispiel eines Regners 12, der als Kreisregner 38 ausgebildet ist. Das Programmiergerät 26 ermittelt für den Regner 12 anhand der Geometriedaten der Beregnungsgebiete 28 und/oder Beregnungsflächen 16 und der Regnerposition 54 des Regners 12 die Beregnungssteuerparameter 22 und übermittelt diese in relativen Koordinaten an die Programmiereinheit 20. In einem weiteren Betriebsmodus kann diese Aufgabe vom Gebietsserver 30 durchgeführt werden. Der Gebietsserver 30 koordiniert den Einsatz der Regner 12 unter anderem auf Basis eines Wetterberichts und gibt der Programmiereinheit 20 einen Befehl, eine Beregnung zu starten. Die Programmiereinheit 20 gibt die Beregnungssteuerparameter 22 des Regners 12 an die Steuervorrichtungen 24 des Regners 12 weiter (Figur 7). Die Beregnungssteuerparameter 22 umfassen eine Beregnungssteuermatrix T mit einem Strahlreichweitenvektor **vₛ**, einem Winkelvektor **v_{α}** und einem Verweildauervektor **vₜ,** mit dem die Kreisregner 38 angesteuert werden, so dass diese die Beregnungsgebiete 28 beregnen. In einer alternativen Ausgestaltung überträgt das Programmiergerät 26 oder der Gebietsserver 30 der Programmiereinheit 20 Geometriedaten der durch den Regner 12 zu beregnenden Beregnungsfläche 16 in absoluten Koordinaten. Die Programmiereinheit 20 ermittelt aus den absoluten Geometriedaten und der Regnerposition 54 die Beregnungssteuerparameter 22.

Figur 8 zeigt eine schematische Darstellung eines Datenflusses des Programmiersystems 14 zur Berechnung der Beregnungssteuerparameter 22. Abhängig vom Betriebsmodus kann diese Berechnung von dem Programmiergerät 26, dem Gebietsserver 30 oder der Programmiereinheit 20 durchgeführt werden. In einem Datenmodell 90 sind Beregnungsgebiete 28 in absoluten Koordinaten abgelegt. Ein Beregnermodell 92 enthält eine Beschreibung von Regnern 12, zum Beispiel des Kreisregners 28 oder des Viereckregners 86. Mit Hilfe des Beregnermodells 92 werden die Beregnungssteuerparameter 22 für den Regner 12 berechnet und an die Programmiereinheit 20 übergeben. Die Programmiereinheit 20 gibt diese an die Steuervorrichtung 24 weiter und steuert so den Regner 12. Die Programmiereinheit 20 verfügt über einen Parameterspeicher 94 zur Speicherung der Beregnungssteuerparameter 22. Zum Beispiel im benutzergesteuerten Betrieb 82 können die Beregnungssteuerparameter 22 auch direkt vom Benutzer 36 erzeugt und der Programmiereinheit 20 übermittelt werden. Die Programmiereinheit 20 speichert diese im Parameterspeicher 94 und überträgt sie an das Beregnermodell 92. Mit Hilfe des Beregnermodells 92 wird die Beregnungsfläche 16 in absolute Koordinaten umgerechnet und in das Datenmodell 90 der Beregnungsgebiete 28 integriert. Das Datenmodell 90 und das Beregnermodell 92 sind im gezeigten Beispiel Teil des Gebietsservers 30, der die Berechnung der Beregnungssteuerparameter 22 durchführt.

Figur 9 zeigt die Festlegung der Beregnungsfläche 16 in einem Beregnungsgebiet 28 beim Kreisregner 38. Figur 9-I zeigt die maximale Beregnungsfläche 16 des Kreisregners 38 bei seiner aktuellen Regnerposition 54 und das Beregnungsgebiet 28. Figur 9-II zeigt die Schnittmenge der maximalen Beregnungsfläche 16 und des Beregnungsgebiets 28. Die Beregnungssteuerparameter 22 werden so festgelegt, dass der Kreisregner 38 die der Schnittmenge entsprechende, in Figur 9-II gezeigte Beregnungsfläche 16' beregnet. Um das verbleibende Gebiet des Beregnungsgebietes 28 zu beregnen, sind weitere Regner 12 notwendig. Alternativ kann die Regnerposition 54 des Kreisregners 38 verändert und ein weiterer Beregnungsvorgang kann durchgeführt werden, bis das ganze Beregnungsgebiet 28 beregnet ist.

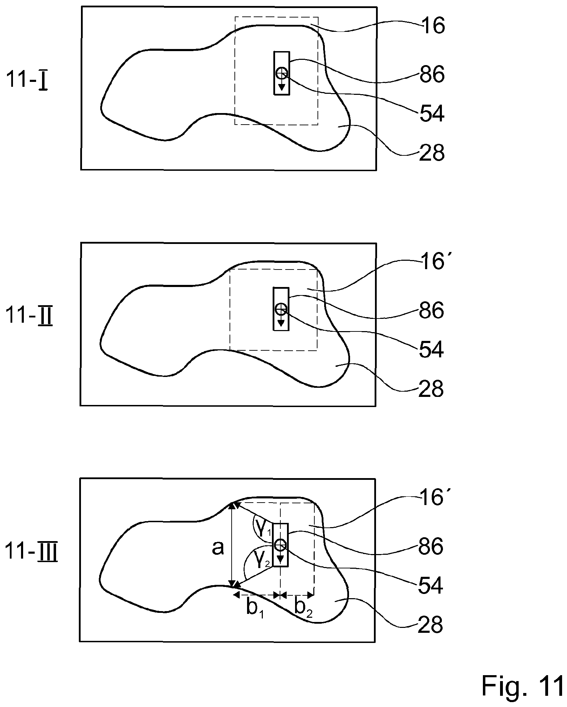

Figur 10 zeigt eine schematische Darstellung des als Viereckregner 86 ausgebildeten Regners 12 in einer Seitenansicht (Figur 10-I) und einer Draufsicht (Figur 10-II) sowie Beregnungssteuerparameter 22' des Viereckregners 86. Abhängig von den gewünschten Beregnungsflächen 16 kann ein Einsatz eines Kreisregners 38 oder eines Viereckregners 86 vorteilhaft sein. Der Viereckregner 86 weist eine um eine horizontale Achse 96 schwenkbare Düsenanordnung 42' auf. Eine Beregnungsbreite b kann durch eine Festlegung eines Schwenkwinkels β der Düsenanordnung 42' um die Achse 96 von einem Winkel β₁ bis zu einem Winkel β₂, jeweils gemessen von der Horizontalen, bestimmt werden (Figur 10-I). Eine Beregnungslänge a kann durch die Öffnungswinkel γ₁ und γ₂ der aus der Düsenanordnung 42' austretenden Flüssigkeitsstrahlen, gemessen gegenüber der horizontalen Achse 96, bestimmt werden (Figur 10-II). Sind beim Viereckregner 86 alle Parameter β₁, β₂, γ₁ und γ₂ durch eine Steuervorrichtung 24' einstellbar, weisen die Beregnungssteuerparameter 22' für den Viereckregner 86 eine Abfolge von Schwenkwinkeln β von β₁ bis β₂ sowie von Öffnungswinkeln γ von γ₁ bis γ₂ über einer Verweildauer t auf. Im gezeigten Beispiel werden die Parameter γ₁ und γ₂ am Viereckregner 86 fest eingestellt, so dass die Beregnungssteuerparameter 22' einen Schwenkwinkelvektor **v_{β}** und den Verweildauervektor **vₜ** umfassen. Der hier gezeigte Viereckregner 86 weist weiter die Ausnehmung 88 auf, in die das Programmiergerät 26 zur Bestimmung der Regnerposition 54 eingelegt werden kann. Diese Ausnehmung 88 kann auch an anderen Regnern 12, wie zum Beispiel Kreisregnern 38, vorgesehen sein. In Figur 11 ist die Festlegung der Beregnungsfläche 16 und der zugehörigen Beregnungssteuerparameter 22' in einem Beregnungsgebiet 28 beim Viereckregner 86 dargestellt. Die maximale Beregnungsfläche 16 des Viereckrechners 86 ist rechteckig und bei der aktuellen Regnerposition 54 in Figur 11-I dargestellt. Die Beregnungssteuerparameter 22' werden so festgelegt, dass der Viereckregner 86 die der Schnittmenge entsprechende in Figur 11-II gezeigte Beregnungsfläche 16' beregnet. Um Beregnungssteuerparameter 22' zu ermitteln, bei denen der Viereckregner 86 eine der Schnittmenge entsprechende Beregnungsfläche 16' beregnet, wird die Beregnungslänge a gemessen und mit dieser werden die Winkel γ₁ und γ₂ festgelegt (Figur 11-III). Weiter wird die Beregnungsbreite b, ausgehend von der Achse 96 unterteilt in b₁ und b₂, gemessen, um den Schwenkbereich β₁ bis β₂ des Schwenkwinkels β zu bestimmen. Durch eine Variation des Schwenkwinkels β über der Verweildauer t wird die Beregnungsfläche 16' beregnet. Der Verweildauervektor **vₜ** bestimmt dabei die Geschwindigkeit, mit der der Schwenkwinkel β verändert wird.

### Bezugszeichen

- 10: Beregnungssteuerungssystem
- 12: Regner
- 14: Programmiersystem
- 16: Beregnungsfläche
- 18: Gebietskarte
- 20: Programmiereinheit
- 22: Beregnungssteuerparameter
- 24: Steuervorrichtung
- 26: Programmiergerät
- 28: Beregnungsgebiet
- 30: Gebietsserver
- 32: Informationssystem
- 34: Schutzgebiet
- 36: Benutzer
- 38: Kreisregner
- 40: Achse
- 42: Düsenanordnung
- 52: Garten
- 54: Regnerposition
- 56: Gehäuseeinheit
- 58: Datenverbindung
- 60: Speichereinheit
- 62: Bildschirm
- 64: Gebiet (erstes)
- 66: Gebiet (zweites)
- 68: Gebiet (drittes)
- 70: Kontur
- 74: Smartphone
- 76: Schutzradius
- 78: Betriebsmodus
- 80: Unabhängiger Betrieb
- 82: Benutzergesteuerter Betrieb
- 84: Systembetrieb
- 86: Viereckregner
- 88: Ausnehmung
- 90: Datenmodell
- 92: Beregnermodell
- 94: Parameterspeicher
- 96: Achse
- **vₛ**: Strahlreichenweitenvektor
- **v_{α}**: Winkelvektor
- **vₜ**: Verweildauervektor
- **v_{β}**: Schwenkwinkelvektor
- T: Beregnungssteuermatrix
- s: Strahlreichweite
- t: Zeit
- α: Winkel
- β: Schwenkwinkel
- γ: Öffnungswinkel
- b: Beregnungsbreite
- a: Beregnungslänge

## Patentansprüche

1. Beregnungssteuerungssystem zur Steuerung zumindest eines Regners (12), mit einem Programmiersystem (14), das dazu vorgesehen ist, zumindest eine Beregnungsfläche (16) des Regners (12) mit Hilfe einer Gebietskarte (18) festzulegen, **dadurch gekennzeichnet, dass** das Programmiersystem (14) dazu vorgesehen ist, Geometriedaten der Gebietskarte (18) in Beregnungssteuerparameter (22) der Steuervorrichtung (24) des Regners (12) zu transformieren.

2. Beregnungssteuerungssystem nach Anspruch 1, **dadurch gekennzeichnet, dass** das Programmiersystem (14) zumindest eine Programmiereinheit (20) aufweist, die dazu vorgesehen ist, Beregnungssteuerparameter (22) an eine Steuervorrichtung (24) des Regners (12) zu übermitteln.

3. Beregnungssteuerungssystem nach Anspruch 1 oder 2, **dadurch gekennzeichnet, dass** das Programmiersystem (14) über ein Programmiergerät (26) zur Definition von Beregnungsgebieten (28) und/oder Beregnungsflächen (16) verfügt.

4. Beregnungssteuerungssystem nach Anspruch 2 und/oder 3, **dadurch gekennzeichnet, dass** das Programmiersystem (14) einen mit der Programmiereinheit (20) und/oder dem Programmiergerät (26) in zumindest einem Betriebszustand verbundenen Gebietsserver (30) aufweist.

5. Beregnungssteuerungssystem nach einem der vorhergehenden Ansprüche, **dadurch gekennzeichnet, dass** das Programmiersystem (14) dazu vorgesehen ist, zumindest ein Schutzgebiet (34) aus Beregnungsgebieten (28) und/oder der Beregnungsfläche (16) auszunehmen.

6. Beregnungssteuerungssystem nach einem der vorhergehenden Ansprüche, **dadurch gekennzeichnet, dass** das Programmiersystem (14) in zumindest einem Betriebsmodus zu einer direkten Steuerung des Regners (12) durch einen Benutzer (36) vorgesehen ist.

7. Beregnungssteuerungssystem nach Anspruch 6, **dadurch gekennzeichnet, dass** das Programmiersystem (14) in zumindest einem Betriebsmodus dazu vorgesehen ist, Beregnungsflächen (16) des Regners (12) mittels direkter Steuerung des Regners (12) durch den Benutzer (36) festzulegen.

8. Beregnungssteuerungssystem nach einem der vorhergehenden Ansprüche, **dadurch gekennzeichnet, dass** das Programmiersystem (14) dazu vorgesehen ist, Beregnungssteuerparameter (22) für einen Kreisregner (38) zu ermitteln, der eine durch eine Steuervorrichtung (24) um eine vertikale Achse (40) drehbare Düsenanordnung (42) und eine einstellbare Strahlreichweite (s) aufweist, und/oder Beregnungssteuerparameter (22') für einen Viereckregner (86) zu ermitteln, der eine um eine horizontale Achse (96) schwenkbare Düsenanordnung (42') aufweist.

9. Beregnungssteuerungssystem nach Anspruch 8, **dadurch gekennzeichnet, dass** die Beregnungssteuerparameter (22) für den Kreisregner (38) zumindest einen Strahlreichweitenvektor (**vₛ**) und/oder zumindest einen Winkelvektor (**v_{α}**) und/oder zumindest einen Verweildauervektor (**vₜ**) umfassen und/oder dass die Beregnungssteuerparameter (22') für den Viereckregner (86) zumindest einen Schwenkwinkelvektor (**v_{β}**) und/oder zumindest einen Verweildauervektor (**vₜ**) umfassen.

10. Beregnungsvorrichtung mit zumindest einem Regner (12) und einem Beregnungssteuerungssystem (10) nach einem der Ansprüche 1 bis 9.

11. Verfahren zur Festlegung einer Beregnungsfläche (16) und/oder eines Beregnungsgebiets (28) mit einem Beregnungssteuerungssystem (10) nach einem der Ansprüche 1 bis 9.

## Claims

1. Sprinkling control system for controlling at least one sprinkler (12), with a programming system (14) which is provided to establish at least one sprinkling area (16) of the sprinkler (12) by means of a zone map (18), **characterized in that** the programming system (14) is provided to transform geometric data of the zone map (18) into sprinkling control parameters (22) of a control device (24) of the sprinkler (12).

2. Sprinkling control system according to claim 1, **characterized in that** the programming system (14) has at least one programming unit (20) which is provided to transmit sprinkling control parameters (22) to a control device (24) of the sprinkler (12).

3. Sprinkling control system according to claim 1 or 2, **characterized in that** the programming system (14) has a programming device (26) for defining sprinkling zones (28) and/or sprinkling areas (16).

4. Sprinkling control system according to claim 2 and/or 3, **characterized in that** the programming system (14) has a zone server (30) which is linked with the programming unit (20) and/or the programming device (26) in at least one operating state.

5. Sprinkling control system according to one of the preceding claims, **characterized in that** the programming system (14) is provided to exclude at least one protected area (34) from sprinkling zones (28) and/or the sprinkling area (16).

6. Sprinkling control system according to one of the preceding claims, **characterized in that** the programming system (14) is provided in at least one operating mode for direct control of the sprinkler (12) by a user (36).

7. Sprinkling control system according to claim 6, **characterized in that** the programming system (14) is provided in at least one operating mode to establish sprinkling areas (16) of the sprinkler (12) through direct controlling of the sprinkler (12) by the user (36).

8. Sprinkler control system according to one of the preceding claims, **characterized in that** the programming system (14) is provided to determine sprinkling control parameters (22) for a rotary sprinkler (38) which has a nozzle assembly (42) that can be rotated about a vertical axis (40) by a control device (24) and an adjustable stream range (s), and/or determining sprinkling control parameters (22') for an oscillating sprinkler (86) having a nozzle assembly (42') that is pivotable about a horizontal axis (96).

9. Sprinkling control system according to claim 8, **characterized in that** the sprinkling control parameters (22) for the rotary sprinkler (38) comprise at least one stream range vector (vₛ) and/or at least one angle vector (v_{α}) and/or at least one dwell time vector (vₜ) and/or **in that** the sprinkler control parameters (22') for the oscillating sprinkler (86) comprise at least one swivel angle vector (v_{β}) and/or at least one dwell time vector (vₜ).

10. Sprinkling device with at least one sprinkler (12) and a sprinkler control system (10) according to any one of claims 1 to 9.

11. A method for establishing a sprinkling area (16) and/or a sprinkling zone (28) with a sprinkler control system (10) according to one of claims 1 to 9.

## Revendications

1. Système de commande d'arrosage pour commander au moins un arroseur (12), avec un système de programmation (14) qui est prévu pour établir au moins une area d'arrosage (16) de l'arroseur (12) au moyen d'une carte de zone (18), **caractérisé en ce que** le système de programmation (14) est prévu pour transformer des données géométriques de la carte de zone (18) en paramètres de commande d'arrosage (22) de un dispositif de commande (24) de l'arroseur (12).

2. Système de commande d'arrosage selon la revendication 1, **caractérisé en ce que** le système de programmation (14) comporte au moins une unité de programmation (20) pour transmettre paramètres de commande d'arrosage (22) au dispositif de commande (24) de l'arroseur (12).

3. Système de commande d'arrosage selon la revendication 1 ou 2, **caractérisé en ce que** le système de programmation (14) comporte un dispositif de programmation (26) pour définir des zones d'arrosage (28) et/ou areas d'arrosage(16).

4. Système de commande d'arrosage selon la revendication 2 et/ou 3, **caractérisé en ce que** le système de programmation (14) comporte un serveur de zone (30) relié à l'unité de programmation (20) et / ou au dispositif de programmation (26) au moins un état de fonctionnement.

5. Système de commande d'arrosage selon l'une des revendications précédentes, **caractérisé en ce que** le système de programmation (14) est prévu pour exclure au moins une zone protégée (34) des zones d'arrosage (28) et/ou de l'area d'arrosage (16).

6. Système de commande d'arrosage selon l'une des revendications précédentes, **caractérisé en ce que** le système de programmation (14) est prévu dans au moins un mode de fonctionnement pour la commande directe de l'arroseur (12) par un utilisateur (36).

7. Système de commande d'arrosage selon la revendication 6, **caractérisé en ce que** le système de programmation (14) est prévu dans au moins un mode de fonctionnement pour établir areas d'arrosage(16) de l'arroseur (12) par commande directe de l'arroseur (12) par l'utilisateur (36).

8. Système de commande d'arrosage selon l'une des revendications précédentes, **caractérisé en ce que** le système de programmation (14) est prévu pour déterminer paramètres de commande d'arrosage (22) pour un arroseur rotatif (38) ayant un ensemble de buse (42) pouvant être entraîné en rotation autour d'un axe vertical (40) par un dispositif de commande (24) et une plage de courants réglable (s), et/ou déterminer paramètres de commande d'arrosage (22') pour un arroseur oscillant (86) ayant un ensemble de buse (42') qui peut pivoter autour d'un axe horizontal (96).

9. Système de commande d'arrosage selon la revendication 8, **caractérisé en ce que** les paramètres de commande d'arrosage (22) pour l'arroseur rotatif (38) comprennent au moins un vecteur de plage de flux (vₛ) et/ou au moins un vecteur d'angle (v_{α}) et/ou au moins un vecteur de temps de séjour (vₜ) et/ou **en ce que** les paramètres de contrôle d' arroseur (22') pour l'arroseur oscillant (86) comprennent au moins un vecteur d'angle de pivotement (v_{β}) et/ou au moins un vecteur de temps de séjour (vₜ).

10. Dispositif d'arrosage avec au moins un arroseur (12) et un système de commande d'arrosage (10) selon l'une des revendications 1 à 9.

11. Procédé d'établissement d'une area d'arrosage(16) et/ou d'une zone d'arrosage (28) avec un système de commande d'arrosage (10) selon l'une des revendications 1 à 9.
